# EUROPEAN PATENT APPLICATION

(11) **EP 2 554 400 A1**
(43) Date of publication of application: **06.02.2013**
(21) Application number: 11006362.5
(22) Date of filing: 02.08.2011
(51) Int. Cl.: B60B 19/00, B60T 1/06, B62L 1/00, B60B 3/08

(54) **Wheel with lateral interchangeable shells provided with central breaking means having variable angular position**

(71) Applicant: Brakko S.R.L., 20090 Pantigliate (MI) (IT)
(72) Inventor: Amenta, Giovanni, 20080 Carpiano (MI) (IT); Taschini, Gianangelo, 24125 Bergamo (BG) (IT)

(57) **Abstract**

The particularity of this wheel for motorcycle is the fact of comprising two interchangeable lateral half-shells (18, 19), endowed with the means (41) for their fixing to special parts (16) on both sides of the rim (12) bearing the tyre (15) and equipped in their centre with their own rolling bearing (20, 21) aimed to be set on their respective end of a fixed transversal wheel-hub (3), the mentioned lateral half-shells (18,19) being separated from each other on their axel (4) in order to create a housing for the central braking devices (9,11) including a device (29) for the adjustment of the angular position of an arm (23) holding the brake calipers.

## Description

This invention refers to a wheel with interchangeable side shells, in order to create housing for central braking devices with adjustable angular position implementable via a device for accurate adjustment As everybody knows, motorcycle wheels are realized with just one piece including: the peripheral rim designed to house the tyre, a central radial structure, a central flange equipped with a pair of rolling bearings rotating on a central hub.

This usual type of wheel involves limiting aspects in terms of use. Actually, this type of wheel poses the disadvantage of not allowing aesthetical changes in it using procedures that are both affordable and / or easy. To change its look, you must indeed change the entire wheel, removing even the tyre from it.

Another negative aspect of usual wheels is that they imply being coupled with a central flange mounted permanently on the hub through the typical pair of bearings. Actually, said bearings are exposed to environmental and weather adversities.

The probabilities of the bearings breaking are obviously proportional to the difficulties that are met in the periodical replacement of the bearings, connected to the usual planning conception of the wheels

Another negative aspect of these usual "monobloc wheels" is that they require the brake discs to be positioned laterally or externally on the front wheel, that is in an eccentric position with respect to the centrality of the plane upon which lies the slantwise axis of incidence, around which the wheel orients at each turn of the wheels

In order To understand this problem, you should consider that when the tightening of the brake calliper (also known as "calliper") creates the friction force of the braking on the brake disc, it causes a "moment" that tends to steer the wheel. This moment is instinctively opposed by the reaction that the rider exercises on the handlebars. Such effect reaches its peak when the direction of such force is perpendicular to the above-mentioned central axis of incidence.

To reduce such effect, the custom is to dispose the brake calliper in such a position as to generates a force resulting from the combination with the grip strength on the road-surface, which is supposed to be aligned with the tilt of such axis of incidence, which is generally parallel to the that of the support fork tubes of the aforementioned front wheel.

Compared to the wheel, the brake calliper generally lies in a rear position. The above-mentioned action performed by the strength of friction generated thereby always acts with such an eccentricity as to suffice to contrast the "moment" connected with the sliding friction developed by the wheel braking on the road. The orientation of the strength of friction generated by the brake calliper creates an equal orientation of such strength on the horizontal rotation axis of the wheel as well, thus creating effects deriving from its combination with the sliding friction combined therewith and acting on the periphery of the wheel which is in contact with the road surface. It follows that the arrangement of the brake calliper must express conciliation between these two stresses. Said conciliation is usually expressed in a quite rough way, by placing the brake calliper in an in-between angular position with respect to the ones that extreme conditions may suggest. In this way, an attempt is made to minimize any flexural strain of the fork so as to allow its correct sliding of inertial sinking deriving from the braking of the motorcycle. On the other hand, to eliminate the steering effect, you do not generally adopt a single side brake disc, but a couple of brake discs, placed symmetrically on the sides of the vertical restrain plane of the aforementioned incidence or steering axis.

However, this solution implies much higher costs and does not offer sure guarantees. Actually, the two discs might create different forms of friction, as is the case, for instance, of a strong sideways wind which, in the presence of rain, wets in different ways said two discs or hits with sand in different ways the two discs, depending on the sideways provenience, which keeps the downstream disc sheltered from the upstream disc From these considerations we can therefore deduce what remarkable problems are posed by usual central-spoke wheels, i.e. the problems of the consequent side positioning of the braking-discs designed to the brake the former.

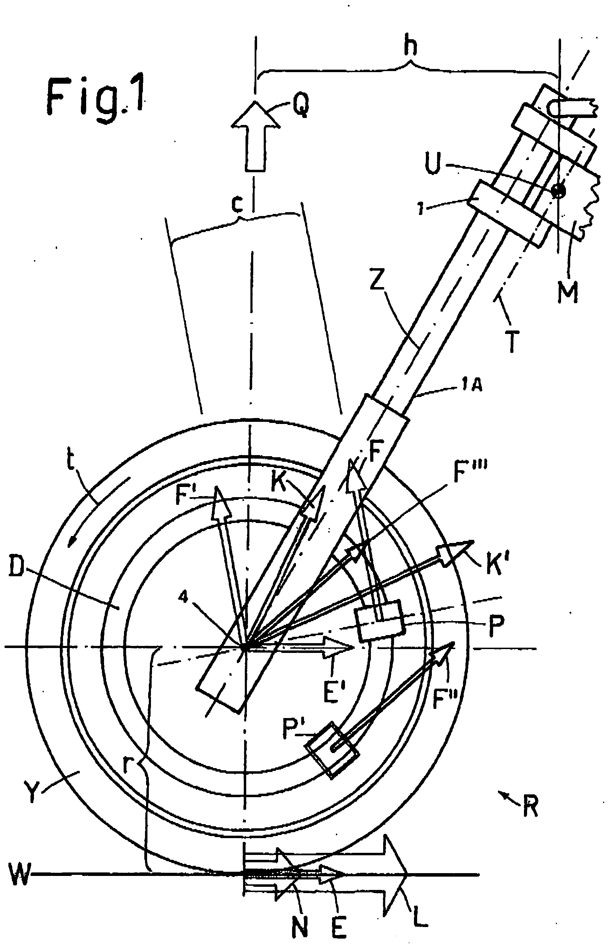

Referring to Fig. 1, which shows a wheel of a generic motorcycle, we can understand the equilibrium of the forces that takes place in the braking of such wheel. First of all, we have a strength of friction E generated between tyre Y and road surface W.

We also have a consequent strength of friction generated by a brake calliper P on a braking-disc D.

Such strengths create "moments" around a rotation axis 4 of a wheel R; thereby, based on the notorious laws of mechanics, the aforementioned strengths act on such axis. When positioned on this axis, the forces are indicated with El e Fl.

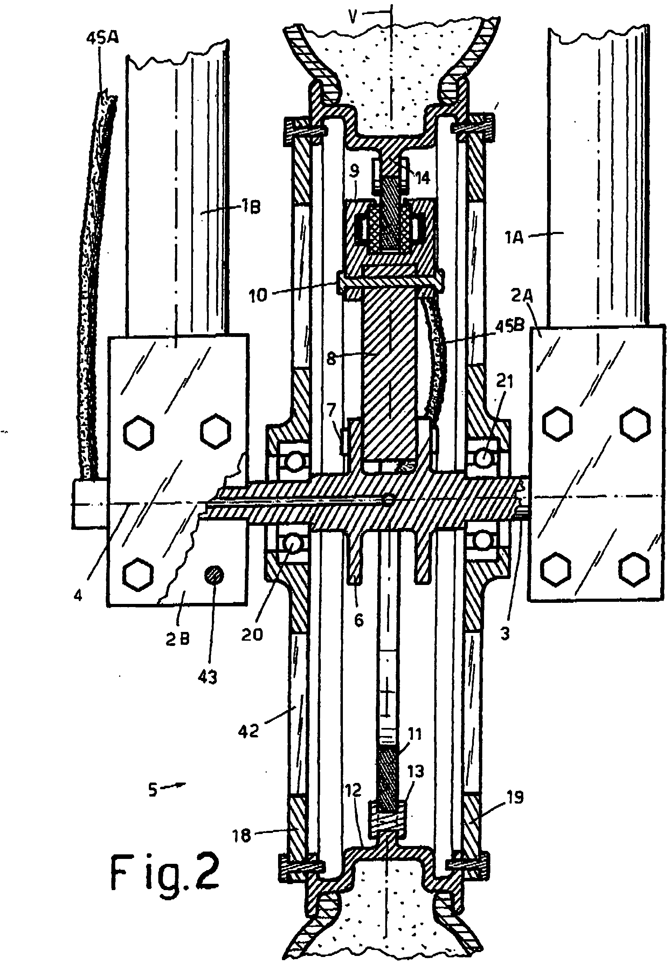

The combination of such forces gives rise to a component Q, directed upwards which creates a moment Q , h, where h stands for the distance between the line of action of Q and a centre of reaction U of a frame M, to which a fork 1 - which includes two tubes 1A, 1B B - is hinged (Fig 2)

This moment is contrary to another moment created by a force L, generated by a tyre Y on road W resulting both from the rolling resistance, and the sliding friction created by braking, acting with an eccentricity r expressed by the radius of wheel R.

This conflict among moments is aimed at keeping the two tubes 1A, 1B of fork 1 straight and suitable for sliding along their own axis Z in order to perform their typical springing.

Tubes 1A, 1B, however, are eccentric with respect to a steering axis T: as this axis T is oblique, the component forces acting along axis Z of the tubes creates unwanted steering moments, whose dangerousness becomes manifest when such forces suddenly increase as a result of bumpy roads, already turned and / or braked wheel.

This means that the usual solution of placing brake calliper P in a posterior position slightly above the horizontal plane passing through the centre of the front wheel, is not satisfactory. Indeed, this position, although in some respects it solves some problems, in other respects continues to generate the vertical component Q, which creates a steering unbalancing moment. This, in turn, can prove dangerous under certain operating conditions of the motorcycle.

Given the extreme complexity of the dynamic equilibrium of the motorcycle due to the extremely and rapidly changing nature of the forces in play, it becomes appropriate to consider the possibility of having at your disposal braking powers which are created by brake callipers - even multiple - and distributed over the entire circularity of the brake disc: in positions suitable for leading them to cancel each other out in their action on the wheel centre, where these braking powers are relieved. Otherwise, it becomes appropriate to consider the possibility of creating braking powers with a variable orientation able to have to wheel hub activated in such ways as to be optimum for the dynamic balance of the motorcycle and for the proper sliding of the tubes of fork 1.

The moment resulting from the product of the strength of friction (generated on the brake disc by the pressure action of the brake pads of brake operated by the specific brake calliper) and the distance from the centre of rotation of the strength of friction, is tangent to the circularity of brake disc D. Since the great significance of this force is a source of problems for the bending action exercised upon the fork, it would be extremely advantageous to split up the braking moment into a plurality of braking moments. Such braking moments might indeed act not only with much smaller powers, but also with locations throughout the entire full circle of the brake disc, and even through a conflict of the brake callipers.

This would no more create "moments" but "force couples", which would allow neutralizing the forces, equal and opposite, which would thus be transferred onto the centre of "rotation"

The effect of the "moment of a force" (torque) actually creates effects equivalent to the action of a "force couple" associated with the creative power of the moment transferred to the centre of rotation, as notoriously defined by the laws of mechanics.

Also with regard to this assumption of the possibility to split up the forces, the usual central-spoke wheels pose a serious impediment. This impediment results from the
fact that the anchorage of brake callipers combined with side brake discs is only possible directly on the wheel support tubes, so that the anchorage of a plurality of brake callipers would require extension offshoots from said tubes which, in addition to being expensive, bulky and inertial, could not in any case find its place in the upper areas due to lack of space between these tubes and the wheel positioned between them. On the other hand, these brake callipers could not even find their place in the lower tube extension areas, because of their overall width in areas close to road surface W, which would limit the "folding" possibilities for the motorcycle required when taking curves at high speed.

Moreover, this assumed splitting up of the braking moments would create a "resultant force" passing through the axis of the wheel, which could be, not only preset as a magnitude, but also as a guideline, in such a way as to act upon the end of the fork, where wheel axis 4 is located, with such an magnitude and orientation as to activate it in the most appropriate way and enable it to perform an ideal operation.

Said "resultant force" created by all the plurality of braking powers as a whole, differently oriented yet all acting perpendicularly to axis of rotation 4 of the wheel, can indeed be created with differentiated braking powers as well, not only according to their angular orientation resulting from the their location, but also differentiated as intrinsic value. In other words, on a certain area of brake disc brake D there could be a calliper could act a brake calliper P equipped with a single pair of opposing hydraulic pistons usual, while on another area of the brake disc angularly spaced of a magnitude deemed appropriate another different brake calliper (i.e. with two pairs of pistons) could act in order to generate a braking power much greater than the previously considered one.

All this potential performance is denied by usual central-spoke wheels.

The above-mentioned problems can be better clarified by the following additional considerations

The rear drive wheel propels the motorcycle forward thus also causing the front wheel to roll on the road. This rolling of the front wheel is refers to the road, in the sense that the fact that the front wheel translates forward along with its axis by rolling on the road, is tantamount to saying that the road moves back and the wheel turns while keeping its own axis of rotation still, This abstraction is useful to better understand the above-mentioned Figure 1, which examines the forces generated by braking the front wheel.

If generic brake calliper P acts on generic brake disc D to stop a rotation t of wheel R, it creates the strength of friction F.

This strength F, however, only exists as long as there is the strength of friction E of the tyre acting on road surface W and gives wheel R its rotation t.

This strength of friction E which drives wheel R is generated by the kinetic energy of the motorcycle; should such kinetic energy not exist, the moment numerically expressed by the product of the strength friction E and the radius r of the wheel could not be generated.

This "energy moment" which drives wheel R is equal and opposite to the moment created with eccentricity C by strength of friction F generated by the action of brake calliper P on disc D. This fact can be understood by assuming that wheel R runs along a stretch of road covered with ice, which prevents its tyre's rubber from generating friction; In this case, we can see that the wheel does not turn any more, comes to a standstill and is therefore no longer able to generate strength F. The motorcycle retains all its kinetic energy, but brake calliper P cannot dissipate it into heat, for the absence of force E eliminates strength F as well.

In order to lock (with the aforementioned presence of ice) wheel R it would indeed be sufficient to act on brake disc D with minimal, irrelevant force, because in this case wheel R would not receive the kinetic energy of the motorcycle from the road and would only be animated by its own, risible kinetic energy, which allows it revolve around its axis 4.

The possibility to thermally dissipate the kinetic energy of the motorcycle in order to determine its stop by means of braking, therefore, requires two moments: an active moment E r and a reactive and opposite moment F . c, where c is the distance of strength F from the horizontal axis 4 of the wheel.

The two moments are equal but, as their respective action arms r and c are different, the relevant strengths are different as well: more precisely, r being greater than c, strength E is smaller than strength F.

These forces E and F are of course relieved on the structure of the motorcycle, i.e. on its frame M. More precisely, since they are creators of moments around axis 4 of the wheel, they act in the material expression of this axis, which consists of wheel hub 3.

On this basis, the two aforementioned forces E and F, which in the drawing are indicated with El and Fl, are transferred onto the hub.

The combined action of these forces generates an "effect", which is expressed by a resultant force K applied to the wheel hub, and to which the rigidity of motorcycle frame M reacts. This reaction of the frame allows the tubes of fork 1 to rise again relatively towards the top, crushing its springs and dissipating a little energy through the damping performed by the shock absorbers; this allows performing the typical frame springing, in which it is not the wheel that was upwards thrust by the components of force K, but it is frame M that, due to the relativity of movements, drops towards wheel R.

This relative movement between the parts, created by the braking, takes place through the sliding of the typical concentric crossbars of the fork tubes -constituting the front suspension - on their own axis The more force K passes through the axis of these crossbars, the more these slide linearly in an ideal way, thus providing the suspension with ideal operating conditions.

However, the possibility of this happening, considering that the strength of friction created by usual brake pads of brake calliper P on brake disc D is "constant", depends on the direction held by strength F.

This direction is tangent to the circularity of brake disc D, so that it depends on the angular position that brake calliper P occupies on the full circle of brake disc D.

Should this brake calliper be placed at a lower point, e.g. like a brake calliper PI, it would generate a strength of friction FII equal to F as for intensity, though oriented differently. This would mean that the force transferred by this brake calliper onto the hub (axis 4) would be FIII which, combined with the unchanged strength El, would generate a resultant KI, which would no more pass through axis Z of the tubes, but sideways, thus creating flexural stresses upon the aforementioned tubes. This would result in a non-ideal operation of the fork. Besides the obvious mechanical problems involving higher costs and wear, this offset of the resultant KI would express its harmfulness especially in those situations where perfection is what allows winning a race reaching the finishing line with a lead of only one hundredth of a second.

Although strength F depends on "how" you brake, it should be noted that what is important in order to achieve the correct orientation of the resultant K is essentially the angular position of brake calliper P, since between the forces E and F there is a constant relationship of proportionality which depends on the ratio between the distances r and c.

So far we have considered the fact that wheel R, resting on road W, undergoes the action of a strength of road friction E which is interdependent with the braking strength F exercised on brake disc D,

In fact, this force E only exists when braking. When, on the contrary, motorcycle runs on the road without braking, wheel R undergoes in any case the action of rolling resistances N, which flexurally stress the fork tubes in proportion to the speed of the motorcycle. This fact helps us understand that when you start braking, the resultant K is not required of perfectly straight fork tubes, but slightly deformed, inflected by these resistances N.

Any resultant K allowing the tubes ideal sliding should in fact act not so much in the aforesaid coaxial direction Z, but with a slight tilt to compensate for inflections generated by the rolling resistances N. Since these rolling resistances are variable, it therefore becomes necessary to adjust the angular position of brake calliper P to the motorcycle speed. This should be done in a precise and instantaneous sense, or simply in a way that considers an "average speed" of conciliation of the multiple possible conditions, which conditions are meant both in terms of daily use of the motorcycle and of conditions related to the specificity of possible different race tracks.

The aim of this invention is to define a motorcycle wheel which is different from the usual central-spoke wheels, in order to allow a quick replacement of its rolling bearings.

Another aim is to define a motorcycle wheel, as above, which can be made using parts suitable for their easy interchangeability with other parts with different look, both in terms of shape and colour.

Another aim is to define a motorcycle wheel, as above, having the property of housing a brake disc in an Internal and central position.

Another aim is to define a motorcycle wheel, as above, having a central internal space suitable for containing a plurality of brake callipers, even different from one another.

Another aim is to define a motorcycle wheel, as above. equipped with side openings suitable for allowing the necessary dissipation of heat produced by the centrally-located brake.

Another aim is to define a motorcycle wheel equipped with a device that allows changing the angular position of the brake callipers.

Another aim is to define a motorcycle wheel, as above, suitable for containing brake callipers placeable in any angular position with respect thereto.

These and other purposes will appear as achieved by reading the following detailed description, which illustrates a motorcycle wheel whose particularity is that it includes two interchangeable side shells, equipped peripherally with means for securing upon slotted pins on the sides of a tyre holding rim and equipped at the centre with their own rolling bearing designed to be mounted on a respective end of a fixed cross-hub, called side half-shells, being axially spaced between them to create housing for central braking means including a device for controlling the angular position of a support arm of brake callipers.

The invention is illustrated, by way of illustration, but not limited to, in the attached drawing tables, where:
Fig. 2 shows a front view of the middle section of a motorcycle front wheel supported by a fork;
Fig. 3 shows a side view of the middle section of an angular position adjusting device of a brake calliper.
Fig. 1 does not show any properties of the invention, but only the theoretical aspects necessary for an understanding thereof.

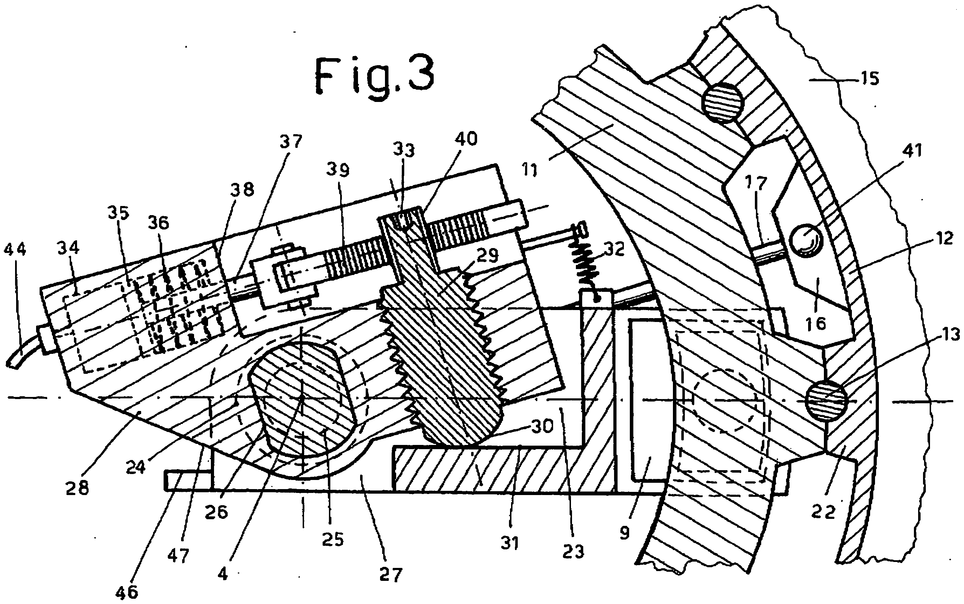

With reference to Fig. 2 above, the generic fork 1 includes tubes 1A, 1B, which at the bottom bear structures 2A, 2B, designed to perform the locking of anti-rotation sections 26 (Fig. 3) of a crosswise hub 3 fixed by means of bolts 43.

Said lock is intended mainly in torsional terms, since it must prevent rotations of hub 3 around axis 4 of rotation of a wheel 5 supported by it.

The central part of hub 3 includes a flange 6 provided with a plurality of holes, arranged circumferentially, in a sufficient number to provide anchorage to bolt pairs 7, through which specific radial supports 8 are fixed onto the former.

Each of these possible radial supports 8 is also peripherally fitted with its own pairs of holes through which to anchor brake callipers 9 by means of bolts 10.

The brake callipers 9 are fed by a brake fluid passing through an axial hole in hub 3 and external flexible hoses 45A, 45B.

These brake callipers 9 interact with a ring-shapes brake disc 11 torsionally integral with a rim 12 by means of usual keying pawls 13. To this end, said rim 12 provides a circumferential inner bulge 14. From what has been said so far, it can be inferred that brake calliper 9 is installed with its typical horseshoe shape and is located in the inner area of brake disc 11. In usual disc brake systems, on the contrary, the brake calliper is located in the outer area, due to the position of its anchorage directly on the fork tubes, rather than on wheel 5 supporting hub 3.

This arrangement inside brake calliper 9, thus, allows extended angular positions inside the full circle: even in lower areas next to the road surface W, in the event that you want to lower the centre of gravity; or if you want to adopt diametrically opposed brake callipers in order to achieve the above-mentioned effect "force couple" which eliminates flexural strengths on axis 4 of cross-hub 3.

The aforementioned arrangement of the braking apparatus in a median vertical plane V perpendicular to the wheel axis is allowed by peculiar design of wheel 5, with entrusts its rolling bearings 20, 21 present at the centre of its half-shells 18 and 19, provided with large openings 42 for enabling ventilation of brake disc 11.

With reference to Figure 3 above, we can understand how the invention allows adjusting the angular position of the brake calliper at the speed at which braking starts, with the device shown using a section according to the median vertical plane V.

With reference to the above-mentioned figure, a portion of its rear side of front wheel R is shown, where a tyre 15 mounted on rim 12 can be distinguished.

Said rim has on its sides circumferential edges, expressed - by way of an example - by slotted pins 16 designed for anchoring heads 41 of usual spokes 17 implementing - with their respective set of half shells 18, 19, thus implementing a very large openings 42.

These spokes converge towards their respective crowns (not drawn) with usual peripheral holes. These crowns, as constitutive of the central part of half-shells 18. 19, are equipped with their own rolling bearings 20, 21, designed to spin wheel 5 with respect to fixed cross- hub 3.

The above half-shells 18 and 19 may be freely made even in other ways to replace spokes 17: that is, with spokes of any type and shape.

On a median plane, on the other hand, rim 12 is provided with a plurality of short projection 22 with parallel faces, in order to interact with keying pawls 13, whereby brake disc 11 is torsionally constrained.

This brake disc undergoes the action of brake calliper 9 mounted on a radial arm 23, sliding freely, with an angular width necessary for the aforementioned adjustment to the motorcycle speed, using its own anti-friction bushing 24 (whose position is indicated on the drawing with dotted circumference) on cylinder systems 25 on the sides of a central area with anti-rotation section 26 engaging a central fixed body 28.

This arm 23 has thus a prong-structure 27 within which its houses the fixed central body 28, shrunk on to anti-rotation section 26 of fixed hub 3 with its own hole in its mating hole.

Said fixed central body 28 bears transversely screwed onto itself a large screw 29 with an end in the shape of a spherical cap 30 resting on a flat surface 31 joining the two prongs 27 of arm 23. This flat surface 31 is always kept in contact with the spherical end 30 through a usual pre-Ioaded spring 32.

Based on this configuration, we understand that the angular position of brake calliper 9 is determined by the support of its radial support arm 23 against the end 30 of large screw 29; this large screw is indeed integral with the central body 28, which is torsionally constrained to cross-hub 3, which is in turn secured by its ends to the respective clamping structures 2A, 2B located at the ends of tubes 1A, 1B of fork 1.

To vary the angular position of brake calliper 9 it is thus sufficient to screw or unscrew large screw 29.

In a simple version, such adjustment screwing can be made, for example, using a usual Allen wrench inserted into a specially provided polygonal hole 33, located on end of large screw 29 opposite to spherical end 30.

If instead you want to adjust the angular position of brake calliper 9 in an automatic way, according to the rolling resistance of wheel 5, the aforementioned device can be implemented via the following hydraulic control.

This control consists of a small cylinder 34 (indicated with a dotted line since it lies at a level underlying that of the section plane) with a sliding plunger 35 This plunger is of simple effect type, since its return stroke depends on a counter spring 36. The fact is, therefore, that the position of plunger 35 is determined by the balance between the force created by the oil pressure in small cylinder 34 and the reaction force of counter spring 36.

The greater the pressure, the more plunger 35 makes its rod 37 jut out from a wall 38 which expresses the fixity of central body 28. Rod 37 is constrained to a rack equipped with 39 teeth parallel and perpendicular to its motion

This rack is coupled to a small pinion 40 integral and coaxial with large screw 29.

In so doing, every small change in the pressure of hydraulic cylinder 34 created by the inflow of oil through a special tube 44 connecting to a pump, creates a movement forward or backward of rack 39 and thus the screwing or unscrewing of large screw 29.

It follows that support arm 23 of brake calliper 9 happens to rest upon one spherical end 30 of the large screw jutting out in a variable way and therefore making automatically variable the above-mentioned angular positioning of the brake calliper.

At this point it remains to be established what means are most appropriate to correlate the above-mentioned rolling resistance, i.e the pre-existing inflection of the tubes, to the oil pressure inside small cylinder 34.

By way of a simple conceptual example, we can mention a generic variable pressure hydraulic pump adjusted electronically by generic sensors (extensometer or strain gauges) of the effort on fork 1 .

To supplement the above, it should be noted that sometimes it is necessary to keep the motorcycle at a standstill on a uphill road with the engine off and / or in neutral, i.e. it is necessary to prevent the motorcycle from running down backwards. In this situation, the braking efforts are minimal, although for their implementation it is still necessary to prevent radial arm 23 from being dragged back by brake disc 11 when you operate brake calliper 9.

This impediment is implemented by a bulge 46, projecting in the axial direction and placed on radial arm 23 in a position opposed to axis 4; this bulge 46 is indeed designed to bump into an area 47 of main body 28, thus limiting the movement back of brake disc 11 retreat, i.e. of the wheel of the motorcycle integral therewith, to a few angular degrees.

With reference to Figure 3 above, it can be seen that spokes 17 are oriented radially, i.e. towards the centre of wheel R.

Although, as mentioned above, the function of these spokes can be freely performed even by half-shells 18, 19 very different in shape and anchorage, the illustration of spokes 17 is aimed at highlighting a particular advantageous aspect of the invention. These spokes 17 may indeed allow the peculiar radial orientation, rather than the typical tangential direction, since the above-mentioned construction of the wheel with half-shells 18, 19 allows adopting the braking apparatus in a central position where brake disc 11 is anchored directly on rim 12 and brake calliper 9 reacts on hub 3. In the presence of this structural configuration, spokes 17 must not react to the torsion generated by the braking moment, but only to the moments created by the rolling of the wheel on the road and to the traction exercised by the motorcycle weight. This therefore allows considerable lightening of wheel R as well as an advantageous reduction in "unsprung masses" of the motorcycle.

## Claims

1. Wheel for motorcycle **characterized by** the fact of comprising two interchangeable lateral half-shells (18, 19), endowed with the means (41) for their fixing to special parts (16) on both sides of the rim (12) bearing the tyre (15) and equipped in their centre with their own rolling bearing (20, 21) aimed to be set on their respective end of a fixed transversal wheel-hub (3), the mentioned lateral half-shells (18,19) being separated from each other on their axel (4) in order to create a housing for the central braking devices (9,11) including a device (29) for the adjustment of the angular position of an arm (23) holding the brake calipers.

2. Wheel for motorcycle, as in the previous claim, **characterized by** the fact that the central breaking devices (V) include a wheel-hub (3) having its end equipped with an anti-rotation section (26) locked with bolts (43) by structures (2A, set on the base of the fork (1A, 1B) in order to allow their central flanges (6) to be rigidly anchored to radial supports (8) in multiple angular positions aimed at making the brake calipers (9) fixed to the end of the radial supports generate friction power (F) in directions where they can be combined with other powers (N, E, L) which stress the fork (1) bearing the wheel (R, 5) in order to give more driving stability to the motorbike in its general using conditions, the mentioned hub having cylindrical sections for the support of the bearings of the half-shells (18, 19).

3. Wheel for motorcycle, as in the previous claims, **characterized by** the fact that the friction powers (F) generated by the brake calipers (9) can be differentiated not only by their angular setting but also by their intensity, and the mentioned brake calipers can be differentiated by the number of usual couples of hydraulic rams which operate the usual braking pads, in order to have them exert different clamping powers on the same braking disc (11).

4. Wheel for motorcycle, as in the previous claims, **characterized by** the fact that the radial supports (8) of the brake calipers (9) are constituted by a fixed central body (28) cooperating with a radial arm (23) which is able to perform angular shifts on the axle (4) of the wheel by means of an anti-friction journal box (24) and which is kept in contact with the fixed central body (28) by a spring (32), in order to perform a precise angular positioning of the powers (F) generated by the brake calipers set on the end of the radial arm (23).

5. Wheel for motorcycle, as in the previous claims, **characterized by** the fact that the precise angular positioning is achieved thanks to the fact that a flat surface (31) of the radial arm (23) rests on a cap-shaped end (30) of a big screw (29) which is able to turn in a conjugated housing of the central body (28) in order to create the required jutting aimed at modifying the angular position from which the brake-calipers actuate on the braking disc (11).

6. Wheel for motorcycle, as in the previous claims, **characterized by** the fact that the big screw (29) can be manually turned using an Allen wrench in a conjugated polygonal hole (33), in order to modify the jutting of its cap-shaped end (30).

7. Wheel for motorcycle, as in the previous claims, **characterized by** the fact that the operating of the big screw (29) is performed by the cooperation of a small pinion (40), set on the end opposite to the cap-shaped one (30), with a rack (39), which has parallel cogs that are orthogonal to the sliding, and the length of which is according to the jutting meant to be achieved with the rotation of the screw, the mentioned rack (39) being connected to a rod (37) of a ram (35) that slides in a hydraulic cylinder (34) by the action of a generic hydraulic fluid with variable pressures achieved through known techniques according to the given needs, the mentioned ram cooperating with a counteracting spring (36).

8. Wheel for motorcycle, as in the previous claims, **characterized by** the fact that the hydraulic pressures operating inside the cylinder (34) are variable according to the flexing stress of the fork (1), which is proportional to the speed of the motorbike.

9. Wheel for motorcycle, as in the previous claims, **characterized by** that the range of back-rotation of the brake disc, in the case that the brakes are used in a rise with the motor off and/or with the gearbox in neutral position, is limited to a few angular degrees thanks to an axially jutting protrusion (46) located on the radial arm (23) in a position opposite to the axel of rotation (4) in order to hit against a specific area (47) of the central body (28).
